(19) Europäisches Patentamt
European Patent Office
Office européen des brevets

(11) Veröffentlichungsnummer: **0 080 520**
**A1**

(12) # EUROPÄISCHE PATENTANMELDUNG

(21) Anmeldenummer: 81109911.8

(22) Anmeldetag: 26.11.81

(51) Int. Cl.³: B 63 B 25/24
F 16 B 7/06, F 16 G 11/12
B 60 P 7/13

(43) Veröffentlichungstag der Anmeldung:
08.06.83 Patentblatt 83/23

(84) Benannte Vertragsstaaten:
AT BE CH FR GB IT LI LU NL SE

(71) Anmelder: Buss Marine Technik GmbH
Altenwerder Damm 22
D-2103 Hamburg 95(DE)

(72) Erfinder: Hey, Heinz-Herbert
Norderstedter Strasse 84 c
D-2359 Henstedt-Ulzburg(DE)

(74) Vertreter: Heldt, Gert, Dr. Dipl.-Ing.
Neuer Wall 57 IV
D-2000 Hamburg 36(DE)

(54) **Vorrichtung zum Verspannen von Verbindern.**

(57) Die Vorrichtung dient zur Beschleunigung der Befestigung von Lasten (8), beispielsweise an Bord von Schiffen. Die Vorrichtung ist mit mehreren stufenweise hintereinanderliegenden Halterungen (4) versehen, in die das Ende (5) eines Verbinders (6, 7) eingelegt wird, der zum Verspannen der Lasten (8) dient. Auf diese Weise wird eine grobe Verspannung der Lasten gegenüber einem Festpunkt (9) vorgenommen. Eine Feinverspannung zur Erzeugung der notwendigen Zurrkraft wird mit Hilfe eines bereits bekannten Spannschlosses (45) herbeigeführt. Die Ausbildung der Halterungen (4) ermöglicht ein Verdrehen der Verbinder (6, 7) im vorgespannten Zustand. Zu diesem Zweck sind Auflagerkonstruktionen vorgesehen, die einerseits das Einlegen der Verbinder (6, 7) und andererseits deren Verdrehen gegenüber der Vorrichtung begünstigen.

EP 0 080 520 A1

./...

Croydon Printing Company Ltd.

6a
13
17
4
1
14
4
2
16
4
14
3
16
4
35
5
4
17
12
6
15
Fig.2

Die Erfindung betrifft eine Vorrichtung zum Verspannen von Verbindern, die bewegliche Lasten gegeneinander und gegenüber mindestens einem Festpunkt festlegen und die aus mindestens zwei Teilen bestehen, deren einander benachbarten Enden über ein Schloß miteinander verbunden sind.

Bisher wurde das Zurren von Lasten mit Hilfe von Verbindern durchgeführt, die als Stangen oder Seile ausgebildet sein konnten. Diese Verbinder wurden mit Hilfe von Spannschlössern gespannt, die aus einer mit gegenläufigen Gewinden versehenen Hülse bestehen, in die beidseitig mit entsprechenden Gewinden versehene Abschlußstücke hineinragen. Das Spannen der Verbinder mit Hilfe der Spannschlösser ist sehr zeitaufwendig, da die Verbinder je nach Anwendungsfall manchmal relativ stark verkürzt werden müssen, während die Gewinde eine kleine Steigung aufweisen, so daß viele Umdrehungen notwendig sind, um die gewünschte Spannung in die Verbinder einbringen zu können. Die Verkürzungen, die mit Hilfe der Spannschlösser vorgenommen werden müssen, ergeben sich zum Beispiel durch die Höhe der Haken, die sich an den Enden der Verbinder befinden, um diese mit den Lasten zu verbinden. Einerseits muß der Verbinder lang genug sein, um den Haken in einen entsprechenden Ring der Last einrasten zu können, andererseits muß nach dem Einrasten des Hakens die zu diesem Zwecke vorhandene Länge des Verbinders mit Hilfe des Spannschlosses verkürzt werden, um die notwendige Spannung in den Verbinder einbringen zu können.

Darüber hinaus gibt es allerdings auch zum Teil erhebliche Niveauunterschiede hinsichtlich der Festpunkte, mit denen die Lasten verbunden werden sollen. Auch diese Niveauunterschiede lassen sich häufig nur mit Hilfe des Spannschlosses überwinden.

Um den Verbinder dem jeweiligen Einsatzzweck schnell anpassen zu können, sind bereits Vorrichtungen vorgeschlagen worden, die eine schnelle Grobanpassung der Länge des Verbinders an den jeweiligen Einsatzzweck ermöglichen. Eine derartige Grobanpassung ist beispielsweise schon mit Stangenteilen vorgenommen worden, die über eine Zahnstangenverzahnung miteinander in Formschluß gebracht werden können. Dabei werden zwei einander benachbarte Stangenteile zunächst durch ein Hebelsystem voneinander abgedrückt. Sodann werden die beiden Stangenhälften in eine Lage zueinander gebracht, die der zu verspannenden Länge in etwa entspricht. Zu diesem Zwecke wurde beispielsweise mit Hilfe eines kleinen hydraulischen Zylinders eine Vorspannung auf die Verbinder aufgebracht. Dieser Zylinder wurde sowohl in den einen als auch in den anderen Teil der beiden benachbarten Verbinder eingehakt. Mit seiner Hilfe wurden die beiden Enden soweit aufeinander zubewegt, bis sie über die Zahnstangenverzahnung miteinander in Eingriff gebracht werden konnten. In dieser Stellung wurden die sich einander gegenüberliegenden Zähne miteinander in Eingriff gebracht und die beiden auf diese Weise miteinander verbundenen Enden gegeneinander festgelegt. Diese Zahnstangenverzahnung ist sowohl hinsichtlich ihrer Herstellung als auch hinsichtlich ihrer Betätigung relativ teuer. Die Herstellung der Verzahnung ist kostenaufwendig und die Betätigung des Hydraulikzylinders nimmt relativ lange Zeit in Anspruch.

Aufgabe der vorliegenden Erfindung ist es daher, eine Vorrichtung der eingangs genannten Art so zu verbessern, daß mit ihr relativ billig und schnell eine dem jeweiligen Einsatzzweck entsprechende große Vorspannung in den Verbinder eingebracht werden kann.

Diese Aufgabe wird erfindungsgemäß dadurch gelöst, daß das Schloß mit mindestens zwei in Richtung des Verbinders hintereinander liegenden Halterungen versehen ist, die eine mindestens eines der beiden benachbarten Enden aufnehmende Ausbildung aufweisen.

Derartige Vorrichtung haben den Vorteil, daß man mit ihnen schnell eine Spannung in den Verbinder eingebracht werden kann. Je nach der jeweils zu überbrückenden Länge, die zwischen den beiden zu verbindenden Enden eines Verbinders liegt, wird das eine oder andere Ende des Verbinders in eine der Halterungen eingehakt. Der Abstand zwischen diesen Halterungen ist so bemessen, daß er den üblichen zu überbrückenden Niveauunterschieden entspricht. Die auf diese Weise erzeugte längengerechte Kupplung ermöglicht ein schnelles Aufbringen der Zurrspannung durch ein zusätzlich vorgesehenes Spannschloß herkömmlicher Bauart. Über ein Gewinde in dem Verbinder wird die zum Verzurren der Lasten notwendige Spannung eingebracht. Bei der Verwendung der erfindungsgemäßen Vorrichtung werden die zu verbindenden Enden und der Verbinder so ausgebildet, daß das herkömmliche Prinzip der Erzeugung von Spannung im Verbinder durch Verdrehen einer Hülse beibehalten werden kann. Das zu diesem Zwecke vorzusehende Gewinde kann entweder unmittelbar in der Hülse der Vorrichtung vorgesehen sein oder in Form eines gesonderten Spannschlosses der erfindungsgemäßen Vorrichtung in einer Reihe geschaltet sein.

Gemäß einer bevorzugten Ausführungsform der Erfindung bilden die Halterungen eine aus mehreren Stufen bestehende längeneinstellende Kupplung, in die das eine der beiden benachbarten Enden einrastet und mit der das andere Ende über eine Feinspanneinrichtung in Verbindung steht. Diese Kombination von längeneinstellender Kupplung und Feinspanneinrichtung ermöglicht gleichzeitig die schnelle Anbringung einer Vorspannung und Aufbringung der zum Verzurren notwendigen Endspannung.

Mit dieser kombinierten Vorrichtung kann deswegen die Anzahl der zum Verzurren notwendigen Teile kleingehalten werden. Außerdem sind diese kombinierten Vorrichtungen einfach in der Handhabung, weil sie weitgehend auf bisher bekannten Prinzipien aufgebaut sind.

Weitere Einzelheiten der Erfindung ergeben sich aus den nachfolgenden ausführlichen Beschreibung und den beigefügten Zeichnungen, in denen eine bevorzugte Ausführungsform der Erfindung beispielsweise veranschaulicht ist.

In den Zeichnungen zeigen:

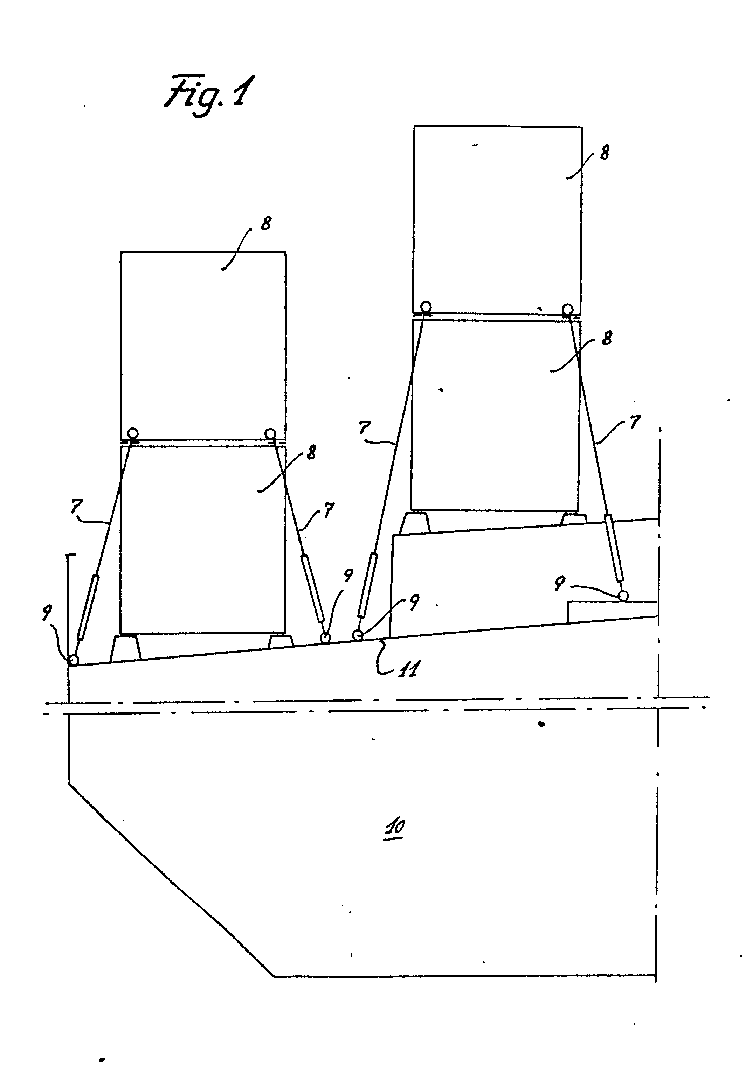

Figur 1: einen Querschnitt durch ein mit Transportbehältern beladenes Schiff,

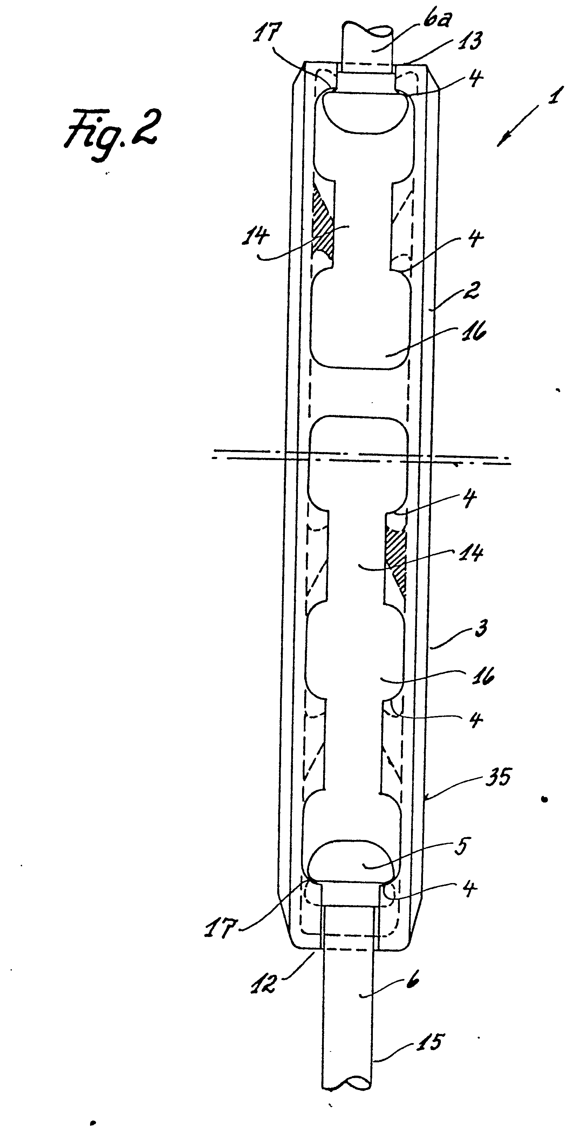

Figur 2: einen Längsschnitt durch eine Vorrichtung mit beidseitig ausgebildeten Halterungen,

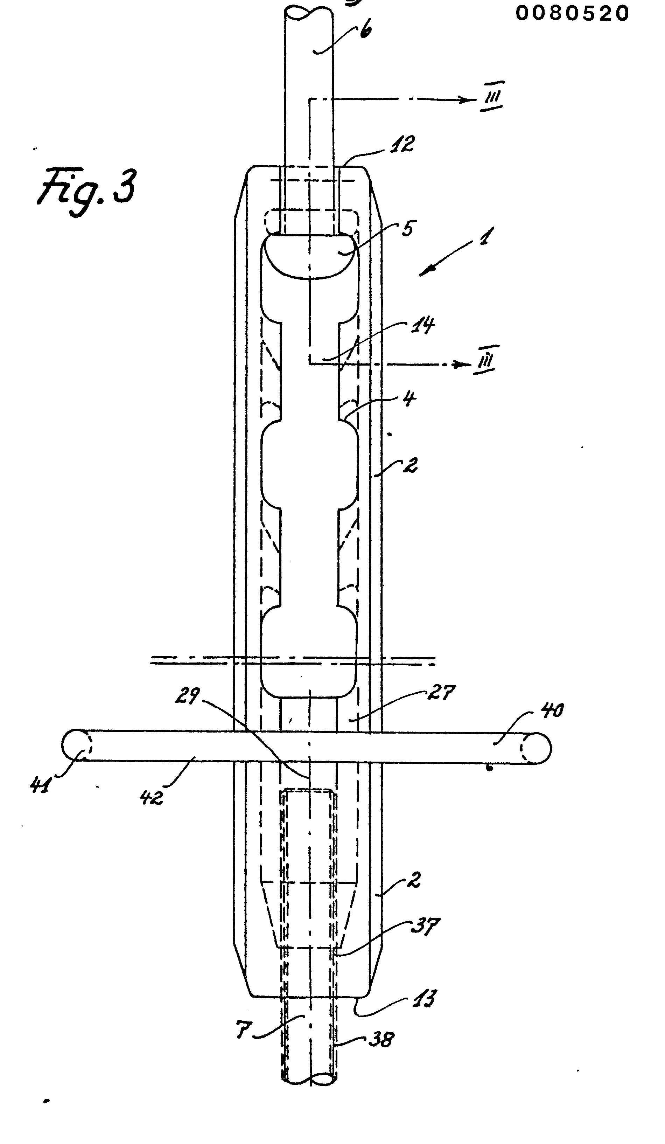

Figur 3: einen Längsschnitt durch eine Vorrichtung mit Halterungen auf der einen und einem Gewinde auf der anderen Seite,

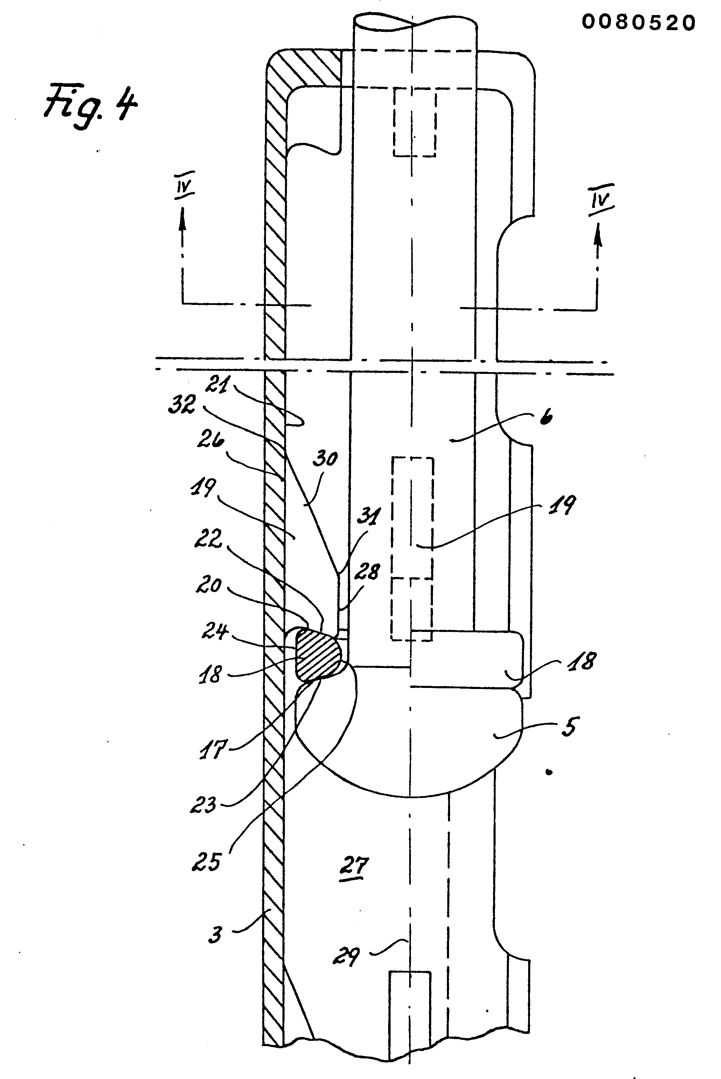

Figur 4: ein vergrößerter Ausschnitt aus dem Längsschnitt einer Vorrichtung gem. der Schnittlinie III-III in Figur 3,

Figur 5: einen Querschnitt durch eine Vorrichtung gem. der Schnittlinie IV-IV in Figur 4,

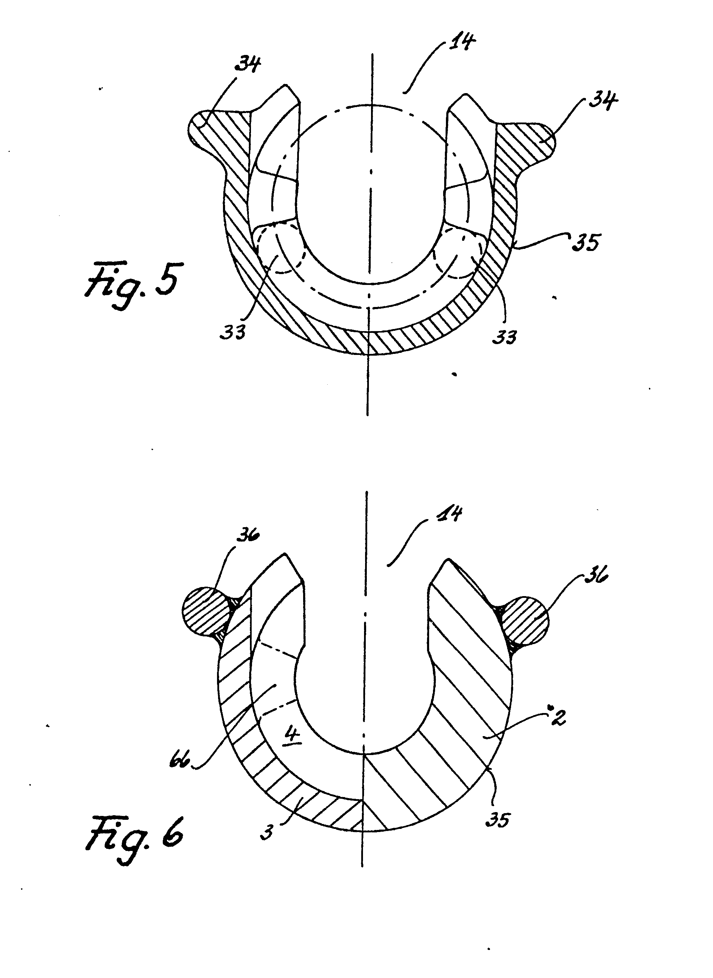

Figur 6: einen Querschnitt durch eine andere Ausführungsform der Vorrichtung,

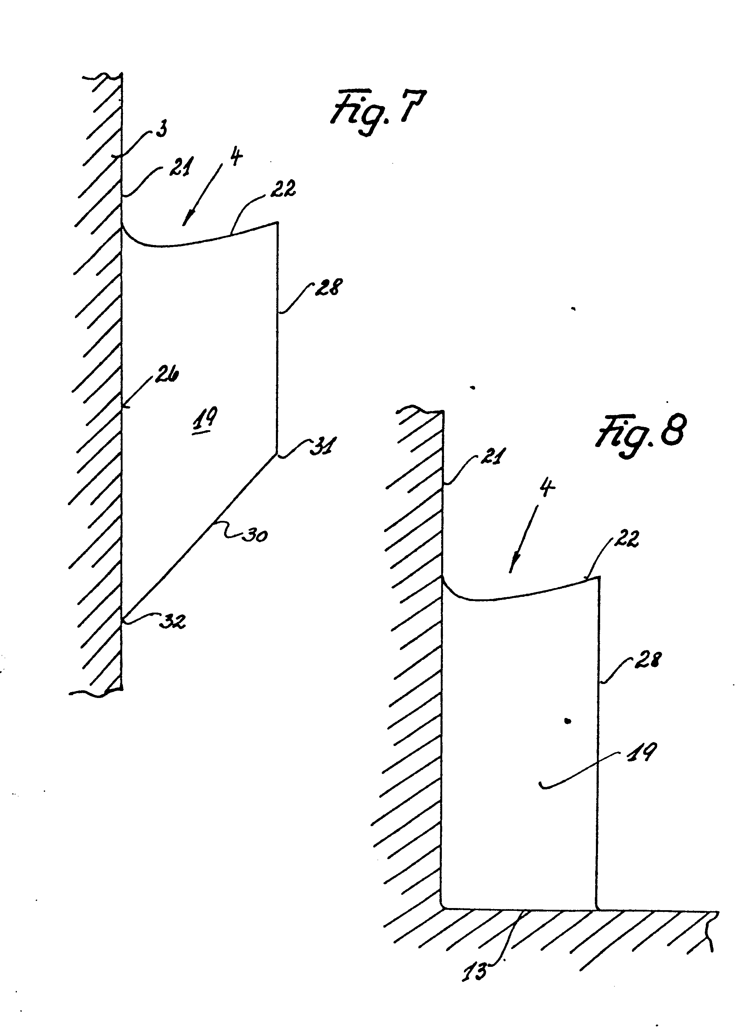

Figur 7: eine Ansicht eines Auflagers,

Figur 8: eine Ansicht eines anderen Auflagers,

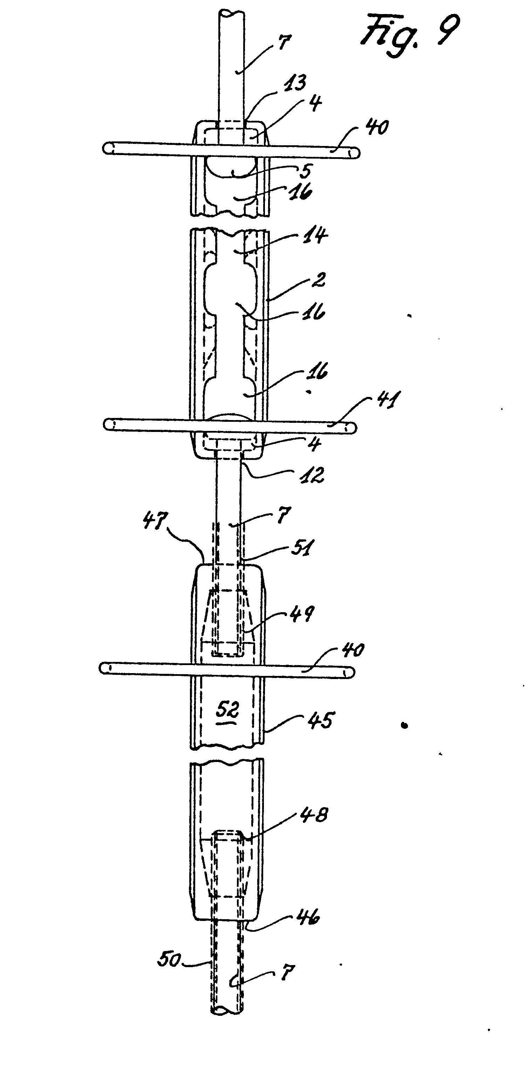

Figur 9: einen Schnitt durch die Kombination einer Grobspanneinrichtung mit einer Feinspanneinrichtung,

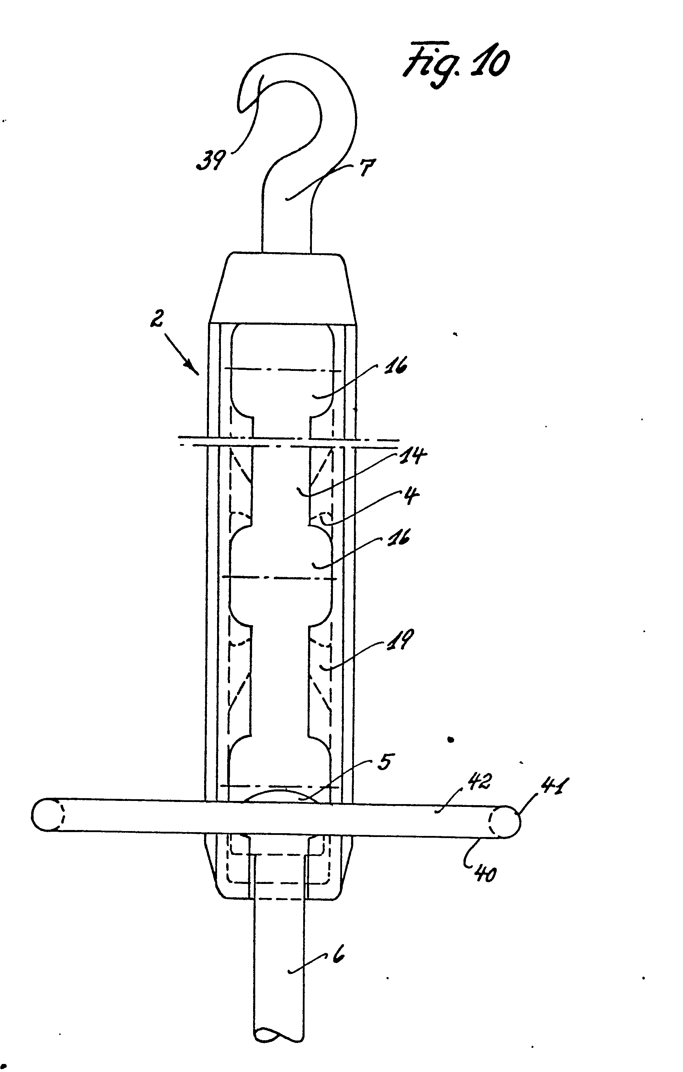

Figur 10: einen Längsschnitt durch eine mit einem Haken versehene Grobspanneinrichtung,

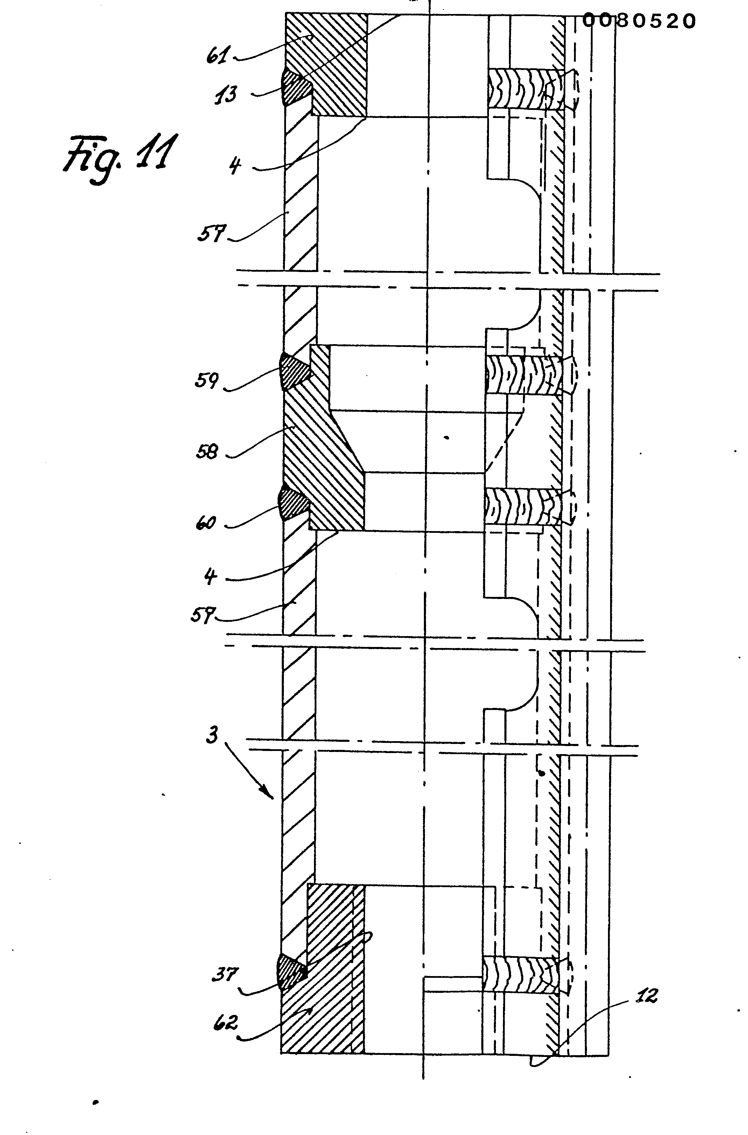

Figur 11: je zur Hälfte einen Längsschnitt und eine Ansicht einer geschweißten Hülse,

Figur 12: eine Ansicht einer mit zwei Köpfen versehenen Stange,

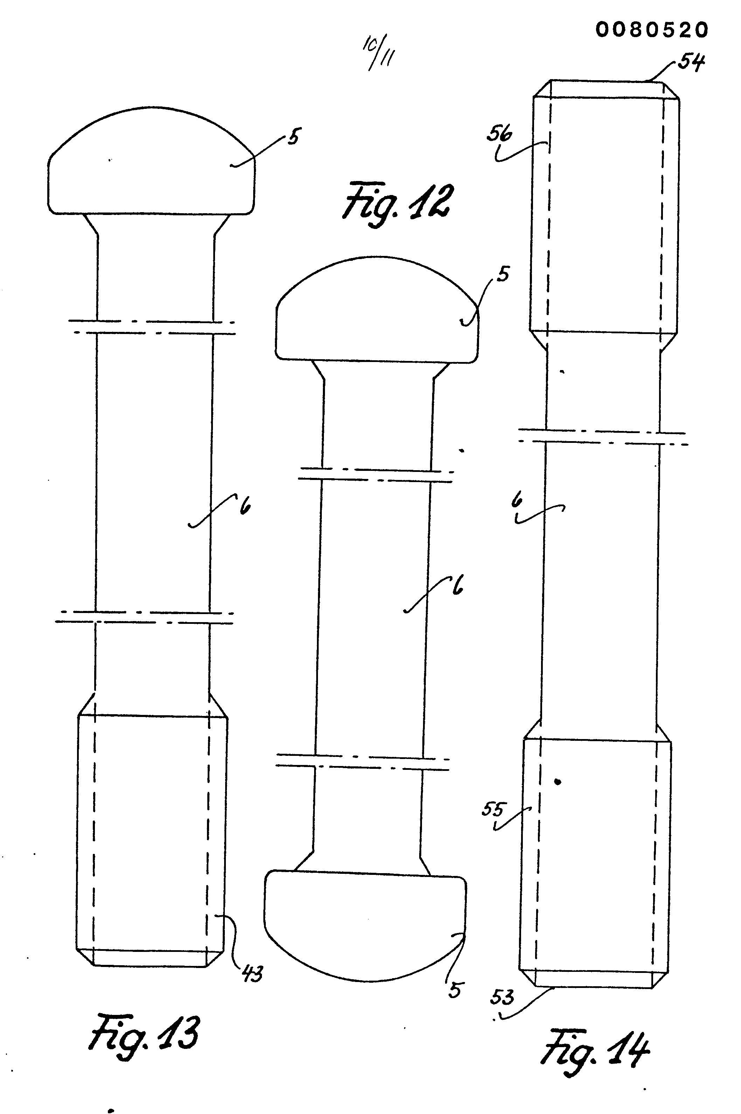

Figur 13: eine Ansicht einer mit einem Kopf und einem Gewinde versehenen Stange,

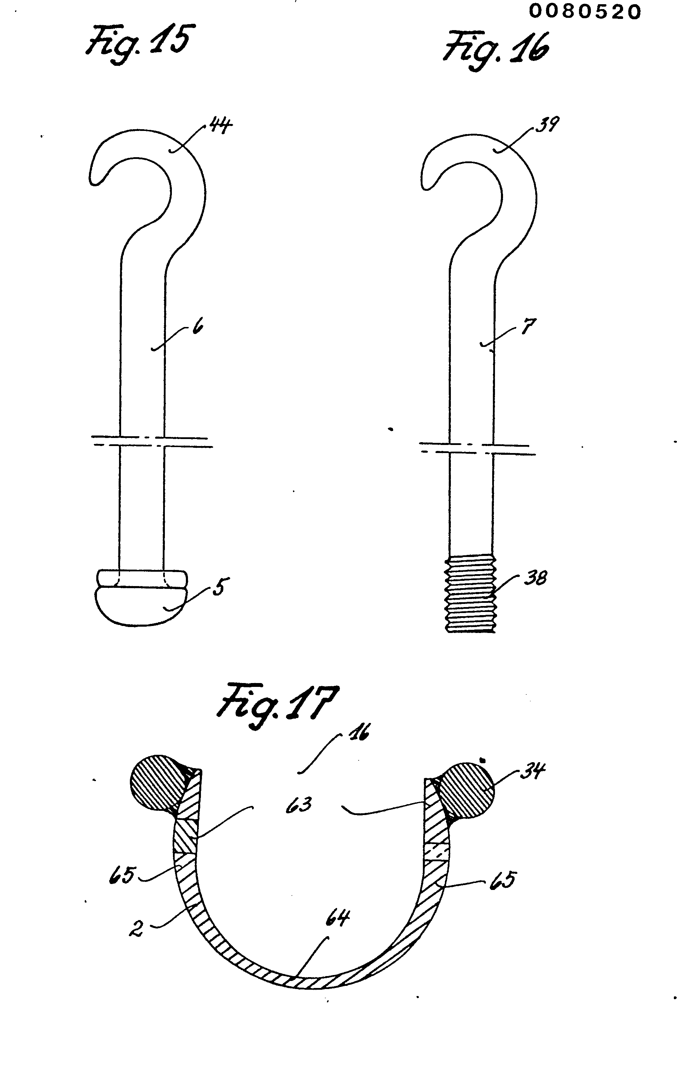

Figur 14: eine Ansicht einer mit zwei Gewinden versehenen Stange,

Figur 15: eine Ansicht eines mit einem Kopf versehenen Hakens,

Figur 16: eine Ansicht eines mit einem Gewinde versehenen Hakens und

Figur 17: einen Querschnitt durch eine Vorrichtung mit unterschiedlich starken Wandstärken.

Eine Vorrichtung zum Verspannen von Verbindern ist als Schloß 1 ausgebildet, das im wesentlichen aus einer Hülse 2 mit einem Hülsenmantel 3 und Auflagern 4 besteht. Auf den Auflagern 4 liegt ein Kopf 5 auf, der an eine Stange 6 angestaucht ist. Diese Stange 6 stellt einen Verbinder 7 dar, mit dem Lasten 8 an einem Festpunkt 9, beispielsweise an Deck 11 eines Schiffes 10 belegt werden.

Die Auflager 4 sind in Längsrichtung der Hülse 2 hintereinander angeordnet. Je nach Gestaltung des Schlosses 1 ragen aus einander entgegengesetzten Enden 12, 13 der Hülse 2 je eine Stange 6, 6a in einander entgegengesetzte Richtungen. Dabei sind beispielsweise für die eine Stange 6a zwei Auflager 4 hintereinander angeordnet, während für die andere Stange 6 mehrere Auflager 4 vorgesehen sind.

Die Auflager 4 sind untereinander verbunden durch einen Längsschlitz 14, dessen Breite der Dicke eines Schaftes 15 der Stange 6, 6a entspricht, so daß dieser Schaft 15 durch den Längsschlitz 14 hindurchgleiten kann. Der Längsschlitz 14 befindet sich im Hülsenmantel 3 und erstreckt sich parallel zur Achse der Hülse 2. Es ist möglich, sämtliche Auflager 4 einer Hülse 2 untereinander zu verbinden. In diesem Falle kommt es darauf an, die Hülse 2 so steif auszubilden, daß sie sich unter dem Einfluß der von ihr übertragenen Zugspannung nicht aufbiegt. Diese Ausbildung hat den Vorteil, daß sie sehr flexibel ist, so daß sie wechselnden Einsatzzwecken gut angepaßt werden kann. Dabei kommt es darauf an, die Auflager 4 so auszubilden, daß sie Köpfe 5 von Stangen 6, 6a aufnehmen können, die in beide der beiden möglichen Richtungen weisen.

Andererseits ist es möglich, daß die dem einen Ende 12 der Hülse 2 zugewandten Auflager 4 nur Köpfe 5 von Stangen 6 aufnehmen können, die in die eine Richtung der Hülse 2 weisen, während dem gegenüberliegenden Ende 13 der Hülse 2 Auflager 4 zugewandt sind, die lediglich vom Kopf 5 der in die andere Richtung weisenden Stange 6a beaufschlagt werden.

Der Längsschlitz 14 ist im Bereich der Auflage 4 zu Einstecköffnungen 16 erweitert, durch die jeweils der Kopf 5 der Stangen 6, 6a hindurchgesteckt wird, damit er mit seiner dem Schaft 15 zugewandten Auflagerfläche 17 das Auflager 4 beaufschlagen kann. Das Auflager 4 ist am Übergang zwischen dem Längsschlitz 14 und der Einstecköffnung 16 ausgebildet, die wie der Längsschlitz 14 im Hülsenmantel 3 der Hülse 2 ausgebildet ist. Die Auflagerfläche 17 kann auf einem Ring 18 vorgesehen sein, der auf Konsolen 19 mit einer der Auflagerfläche 17 gegenüberliegenden Abstützfläche 20 aufliegt. Diese Konsolen 19 sind auf Innenflächen 21 des Hülsenmantels 3 befestigt. Dabei ist es denkbar, daß mehrere Einzelkonsolen 19 auf der Innenfläche 21 in gleichem Abstand von den Enden 12, 13 der Hülse 2 befestigt sind. Es ist allerdings auch denkbar, daß der Kopf 5 einer Stange 6 unmittelbar auf den Konsolen 19 aufliegt, ohne daß ein Ring 18 sich zwischen der Konsole 19 und der Auflagerfläche 17 erstreckt. Schließlich ist es auch denkbar, ringförmige Konsolen auszubilden, die bis auf die Breite des Längsschlitzes 14 auf dem gesamten Umfang der Innenfläche 21 befestigt ist.

Die Abstützfläche 20 des Ringes 18 liegt auf einer Unterstützungsfläche 22 auf, die der Abstützfläche 20 gegenüberliegend auf der Konsole 19 ausgebildet ist. Diese Unterstützungsfläche 22 ist der Form des Ringes 18 weitgehend angepaßt. Sie ist zu diesem Zwecke zum Hülsenmantel 3 ein wenig geneigt, damit der Ring 18 nach dem Auflegen auf die Konsolen 19 in eine dem Durchmesser des Ringes 18 entsprechende definierte Lage gleitet, ohne daß der Ring 18 insoweit ausgerichtet werden muß. Um eine Stabilisierung in dieser Lage zu begünstigen, ist auch mindestens die der Unterstützungsfläche 22 zugewandte Abstützfläche 20 des Ringes 18 entsprechend der Neigung der Unterstützungsfläche 22 angeschrägt. Auf diese Weise liegt die Unterstützungsfläche 22 großflächig auf der Abstützfläche 20 auf, so daß an diesen Stellen mit geringen Flächenpressungen gerechnet werden kann.

Jede der Abstützfläche 20 gegenüberliegende Fläche des Ringes 18 ist mit einer Druckfläche 23 versehen, die weitgehend der Auflagerfläche 17 des Kopfes 5 angepaßt ist. Diese beiden Flächen 17, 23 weisen eine Neigung auf, die dazu führt, daß der Kopf 5 beim Aufsetzen auf den Ring 18 in eine definierte Mittellage gleitet, in der der Ring 18 mit seinen Außen- und Innenflächen konzentrisch zur Achse der Stange 6 und damit des Kopfes 5 verlaufen. Zu diesem Zwecke sind die Auflagerfläche 17 und die Druckfläche 23 leicht in Richtung auf die Achse der Stange 6 geneigt. Sie sind darüber hinaus ballig ausgebildet, damit die Stange 6 beim Aufbringen der Zugspannung sich ein wenig nach dem Verlauf des gesamten Verbinders 7 auf dem Ring 18 ausrichten kann.

Die Konsole 19 stützt sich mit einer Längskante 26 auf der Innenfläche 21 der Hülse 2 ab, so daß die durch die Konsole 19 übertragenen Kräfte auf einer großen Fläche sanft in den Hülsenmantel 3 übertragen werden. Darüber hinaus ist die Konsole 19 als ein in den von der Hülse 2 umschlossenen Innenraum 27 hineinragendes Flacheisen ausgebildet, das eine der Längskante 26 parallel verlaufende kurze Innenkante 28 aufweist, die einer gedachten Achse 29 der Hülse zugewandt ist. Von einem der Unterstützungsfläche 22 abgewandten Endpunkt 31 der Innenkante 28 erstreckt sich eine Schrägkante 30 zum entsprechenden Endpunkt 32 der Längskante 26. Die Anschrägung dieser Schrägkante 30 gegenüber der Innenkante 28 ist so vorgesehen, daß die sich durch die Konsole 19 erstreckenden Kraftlinien sanft in den Hülsenmantel 3 eingeleitet werden können.

Es ist auch denkbar, den Ring 18 so auszubilden, daß er ohne einen der Dicke der Stange 6 entsprechenden Längsschlitz unmittelbar auf die Stange 6 aufgeschoben ist. Eine derartige Ausbildung des Ringes 18 hat den Vorteil, daß beim Einhängen der Stange 6 nicht darauf geachtet zu werden braucht, daß der Schlitz des Ringes 18 mit dem entsprechenden Längsschlitz 14 der Hülse 2 parallel verläuft. Andererseits muß darauf geachtet werden, daß der Ring 18 sich an die entsprechende Auflagefläche 17 des Kopfes 5 anlehnt, wenn die Stange 6 in die Hülse 2 eingehängt wird.

Zwei oder mehrere Konsolen 19 können auf dem Umfang der Innenfläche 21 zweckentsprechend verteilt sein. Zur genauen Festlegung des Ringes 18 bezüglich der Konsolen 19 kann der Ring mit zapfenförmigen Aufweitungen 33 versehen sein, die seitlich die Konsolen 19 in deren Längsrichtung beaufschlagen und auf diese Weise für eine definierte Lage der Ringe 18 bezüglich der Konsolen 19 sorgen.

Darüber hinaus kann auch die Hülse 2 im Bereich des Längsschlitzes 14 mit Schlitzverstärkungen 34 versehen sein. Diese können zapfenartig aus der der Innenfläche 21 abgewandten Außenfläche 35 des Hülsenmantels herausragen. Es ist aber auch denkbar, zur Verstärkung des Längsschlitzes 14 in Längsrichtung der Hülse 2 verlaufende Stangen 36 im Bereich der Einstecköffnungen 16 mit dem Hülsenmantel 3 zu verschweißen.

Bei der Anordnung der Konsolen 19 bzw. eines den Kopf 5 aufnehmenden Ringes in der Hülse 2 kommt es darauf an, die Unterstützungsfläche 22 so auszubilden, daß der Kopf 5 auch dann noch innerhalb der Hülse 2 geführt ist, wenn durch eine augenblickliche Entlastung der Stange 6 die Auflagefläche 17 sich von der Unterstützungsfläche 22 ein wenig abheben sollte. Für diese Fälle ragt der Kopf 5 so weit in den Innenraum 27 der Hülse 2 hinein, daß die auf diese Weise vorgegebene Führung ausreicht, um den Kopf 5 nach dem Wiederauftreten der Spannung der Stange 6 sicher auf den Konsolen 19 zu führen.

Beim Zurren von Lasten 8 werden diese mit Verbindern 7 versehen. Falls die Lasten 8 als Container ausgebildet sind, werden in die entsprechenden Befestigungslöcher, die an den Ecken der Container als sogenannte corner-castings vorgesehen sind, Haken eingehängt. Diese Haken können an dem dem Kopf 5 abgewandten Ende von Stangen 6 vorgesehen sein. Andererseits wird eine entsprechende Stange 6 am Festpunkt 9 beispielsweise an Deck 11 eines Schiffes 10 eingehängt. Auch diese Stange 6a hat einen Kopf 5, der gemeinsam mit dem Kopf 5 der mit dem Container verbundenen Stange 6 über die Hülse 2 miteinander verbunden werden. Dabei wird der eine Kopf 5 der mit dem Container verbundenen Stange 6a in eine der dem Ende 13 zugewandten Einstecköffnungen 16 eingeführt, während der Kopf 5 der mit dem Deck 11 verbundenen Stange 6 in eine der Einstecköffnungen 16 eingeführt wird, die dem Ende 12 benachbart sind. Je nach der Länge der beiden Stangen 6, 6a werden die Einstecköffnungen 16 so gewählt, daß sie bei langen Stangen 6, 6a einander unmittelbar benachbart sind bzw. bei kurzen Stangen weiter den jeweiligen Enden 12, 13 der Hülse 2 zugewandt sind.

Auf diese Weise kann schnell eine Grobanpassung an die jeweilige Länge der Stangen 6, 6a vorgenommen werden. Nunmehr muß noch die zum Zurren der Lasten 8 notwendige Spannung in die Stangen 6, 6a eingeleitet werden. Zu diesem Zwecke stehen mehrere Möglichkeiten zur Verfügung, von denen im folgenden einige beschrieben werden.

Die Hülse 2 kann nur an einem ihrer Enden 12 mit Auflagern 4 und einem diese verbindenden Längsschlitz 14 versehen sein. An dem gegenüberliegenden Ende 13 ist die Hülse 2 mit einem sich in den Innenraum 27 erstreckenden Innengewinde 37 versehen. Diesem Innengewinde 37 entspricht ein auf einem Verbinder 7 angebrachtes Außengewinde 38, das in das Innengewinde 37 eingeschraubt werden kann. Der mit dem Außengewinde 38 versehene Verbinder 7 kann beispielsweise mit einem Haken 39 versehen sein, der seinerseits mit der Last 8 verbunden wird. Zusätzlich ist auf der Hülse 2 ein Handgriff 40 befestigt, mit dessen Hilfe die Hülse 2 um ihre eigene Achse 29 gedreht werden kann. Dieser Handgriff 40 kann beispielsweise als ein den Hülsenmantel 3 umgreifendes Handrad 41 ausgebildet sein, das über einige Speichen 42 mit dem Hülsenmantel 3 verbunden ist.

Eine derartig kombinierte Hülse 2 wird mit ihrem Haken 39, der weitgehend aus dem Innenraum 27 herausgeschraubt ist, mit der Last 8 verbunden. Sodann wird entsprechend ihrer jeweiligen Länge die Stange 6 auf eines der dem Ende 12 zugewandten Auflager 4 eingehängt. Die notwendige Spannung wird in den Verbindern 7 und in der Hülse 2 dadurch erzeugt, daß mit Hilfe des Handrades 41 die Hülse 2 so um ihre eigene Achse gedreht wird, daß das Außengewinde 38 sich in den Innenraum 27 hineinschraubt.

Es ist aber auch möglich, die Stange 6 mindestens einseitig mit einem Außengewinde 43 zu versehen, während sie an ihrem gegenüberliegenden Ende einen Kopf 5 aufweist. Eine derartige Stange 6 kann im Zusammenhang mit einer an ihrem einen Ende 13 mit einem Innengewinde und auf ihrem anderen Ende 12 mit Auflagern 4 versehenen kombinierten Hülse 2 in der Weise verwendet werden, daß das Außengewinde 43 in das Innengewinde 37 der Hülse 2 eingeschraubt wird und der Kopf 5 dieser Stange mit dem entsprechenden Festpunkt 9 beispielsweise an Bord des Schiffes 10 verbunden wird. Demgegenüber ragt aus dem Ende 12 der kombinierten Hülse 2 eine Stange 6 heraus, die an ihrem einen Ende mit einem Haken 44 und an ihrem anderen Ende mit einem Kopf 5 versehen ist. Der Haken 44 wird mit der Last 8 verbunden und der Kopf 5 auf einem entsprechenden Auflager 4 zur Auflage gebracht. Sodann kann durch Verdrehen des Handrades 41 die zum Verzurren der Lasten 8 notwendige Spannung in die Verbinder 7 und die Hülse 2 eingebracht werden.

Eine einseitig mit einem Kopf 5 und auf der anderen Seite mit einem Außengewinde 43 versehene Stange 6 kann auch in der Weise Verwendung finden, daß der Kopf 5 in eine Halterung eingehakt wird, die in die Befestigungsöffnung eines zu verzurrenden Containers eingehängt wird. Diese Halterung ist abgewinkelt und weist an ihrem der Stange 6 zugewandten Ende eine Einstecköffnung 16 auf, die derjenigen des Schlosses 1 entspricht. Auf ihrem anderen Ende ist diese Halterung mit einem in den Eckbeschlag eines Containers einzuhängenden Haken versehen.

Statt einem an seinem einen Ende 13 mit einem Innengewinde 37 und an seinem anderen Ende 12 mit Einstecköffnungen 16 versehenen Schloß 1 kann auch das an beiden Enden 12, 13 mit Einstecköffnungen 16 versehene Schloß 1 mit einem weiteren nur der Feineinstellung dienenden Spannschloß 45 verbunden werden. Dieses Spannschloß 45 ist an seinen beiden Enden 46, 47 mit Innengewinden 48, 49 versehen. In diese Innengewinde ragen Verbinder 7 mit entsprechenden Außengewinden 50, 51 hinein. Das an dem einen Ende 46 vorgesehene Innengewinde 48 und das entsprechende Außengewinde 50 weisen dem Innengewinde 49 und entsprechenden Außengewinde 51 entgegengesetzte Steigungen auf. Dadurch wird erreicht, daß beim Drehen des Spannschlosses 45 um die eigene Achse beide Außengewinde 50, 51 einander gegenläufige Bewegungen entweder aufeinander zu oder voneinander weg ausführen, je nach Drehrichtung des Spannschlosses 45.

Der aus dem einen Ende 47 herausragende Verbinder 7 ist auf seinem dem Außengewinde 51 entgegengesetzten Ende mit einem Kopf 5 versehen, der seinerseits in eine entsprechende Einstecköffnung 16 einer an ihren beiden Enden mit Einstecköffnungen 16 versehenen Hülse 2 hineinragt. Der aus dem anderen Ende 46 herausragende Verbinder 7 wird entweder mit dem Festpunkt 9 oder der Last 8 verbunden. Dieser Verbinder 7 kann zu diesem Zwecke je nach dem gewünschten Einsatzzweck mit einem Kopf 5 oder einem Haken 39 versehen sein.

Während aus dem einen Ende 12 der Hülse 2 der diese mit dem Spannschloß 45 verbindende Verbinder 7 herausragt, ragt aus dem anderen Ende 13 dieser Hülse 2 ein Verbinder 7 heraus, der seinerseits mit seinem anderen Ende eine Verbindung zur Last 8 bzw. zum Festpunkt 9 herstellt, je nachdem, ob der aus dem Spannschloß 45 herausragende Verbinder 7 die andere Verbindung herstellt. Auch der aus dem Ende 13 herausragende Verbinder 7 kann je nach der herzustellenden Verbindung an seinem dem Kopf 5 abgewandten Ende mit einem Haken 39 oder einem anderen Kopf 5 versehen sein. Bevor dieser Verbinder 7 in die Last 8 bzw. den Festpunkt 9 eingehakt wird, wird das Spannschloß 45 mit Hilfe eines Handgriffes 40 so verdreht, daß die Außengewinde 50, 51 möglichst weit aus den Innengewinden 48, 49 herausgeschraubt sind. Dabei ist allerdings zu beachten, daß die Gewinde 48, 49; 50, 51 noch auf ihrer gesamten gegenseitig beaufschlagten Länge tragen müssen, damit über das Gewinde die zur Aufbringung der notwendigen Spannung ausreichenden Kräfte übertragen werden können. Sodann wird das Spannschloß 45 mit dem aus dem einen Ende 46 herausragenden Verbinder 7 in den Festpunkt 9 bzw. die Last 8 eingerastet, während der andere Verbinder 7 mit seinem Kopf 5 durch eine Einstecköffnung 16 durchgeführt und in das entsprechende Auflager 4 eingehängt wird. Der aus dem gegenüberliegenden Ende 13 herausragende Verbinder 7 wird mit der Last 8 bzw. dem Festpunkt 9 verbunden. Dabei wird durch die Wahl des entsprechenden Auflagers 4 eine längengerechte Kupplung der Verbinder 7 vorgenommen und damit eine gewisse Vorspannung erzeugt. Zu diesem Zwecke steht eine Vielzahl von Variationsmöglichkeiten zur Verfügung, da die aus beiden Enden 12, 13 der Hülse herausragenden Verbinder 7 in verschiedene Einstecköffnungen 16 eingehakt werden können. Außerdem können auch die in das Spannschloß 45 beidseitig eingeschraubten Verbinder 7 im Sinne einer Grobanpassung verstellt werden.

Nach Vornahme dieser Grobanpassung wird das Spannschloß 45 mit Hilfe des Handgriffs 40 um seine eigene Achse verdreht, so daß sich die beiden Außengewinde 48, 49 im Innenraum 52 des Spannschlosses 45 aufeinander zubewegen. Dadurch wächst schnell die Spannung in den Verbindern 7, der Hülse 2 und in dem Spannschloß 45. Eine letzte Restspannung wird dadurch erzeugt, daß der die Hülse 2 mit dem Spannschloß 45 verbindende Verbinder 7 einseitig mit Hilfe des Handrades 41 nachgespannt wird. Diese einseitige Nachspannung kann mit kleinerem Kraftaufwand durchgeführt werden, da nur einseitig die Steigung des Gewindes 49 überwunden werden muß.

Gerade bei dieser Kombination einer Hülse 2 mit einem Spannschloß 45, aber auch in allen anderen Fällen der Verwendung einer Hülse 2 muß darauf geachtet werden, daß beim Spannen die Stangen 7 keine Bewegungen ausführen, die dazu führen, daß die Köpfe 5 aus ihren Auflagern 4 ausklinken. Im Regelfall sind die Köpfe 5 auf den Auflagern 4 so gut geführt, daß ein derartiges Verschwenken der Stangen 7 gegenüber der Achse 29 der Hülse 2 nicht möglich ist. Um aber ein Verschwenken auch dann zu verhindern, wenn ein Kopf 5 nicht ordnungsgemäß auf das Auflager 4 gelegt wurde, ist es möglich, die Handgriffe 40 kranzförmig so zu gestalten, daß sie lösbar sowohl die Hülse 2 als auch die durch den Längsschlitz 14 hindurchragenden Stangen 7 umfassen. Der Handgriff 40 wird dann zum Zwecke des Verdrehens der Hülse 2 jeweils so angesetzt, daß er sowohl die Hülse 2 als auch den Verbinder 7 umfaßt, so daß dieser von der kranzförmigen Ausgestaltung des Handgriffes 40 jeweils auf dem Auflager 4 festgehalten wird.

Schließlich ist es auch denkbar, den Verbinder 7 so auszubilden, daß er aus einer Stange 6 besteht, an deren beiden Enden 53, 54 Außengewinde 55, 56 angebracht sind. Ein derartiger Verbinder 7 wird insbesondere dann verwendet, wenn ein Spannschloß 45 mit einer Hülse verbunden wird, die auf ihrer einen Seite 13 ein Innengewinde 37 und auf ihrer anderen Seite 12 mit Auflagern 4 für einen Kopf 5 versehen ist. Bei einer derartigen Kombination verbindet die mit zwei Außengewinden 55, 56 versehene Stange 6 das Spannschloß 45 mit der Hülse 2. Dabei ist es denkbar, daß die beiden Außengewinde 55, 56 eine Steigung in gleichsinniger oder gegensinniger Richtung aufweisen. Entsprechend sind die Innengewinde im Spannschloß 45 bzw. in der Hülse 2 vorzusehen. Eine derartige Kombination von Spannschloß 45 und Hülse 2 wird sich insbesondere dann lohnen, wenn gelegentlich eine Nachspannung der Lasten 8 erforderlich ist. In diesem Falle sind regelmäßig relativ wenige Umdrehungen zum Nachspannen der Lasten 8 erforderlich. Diese wenigen Umdrehungen können dadurch erzeugt werden, daß die Hülse 2 um ihre Achse 29 verdreht wird.

Sowohl die Hülse 2 als auch die Ringe 18 können gegossen oder geschmiedet werden. Es ist auch möglich, die Hülse 2 als eine Schweißkonstruktion auszuführen. In diesem Fall werden die Auflager 4 als Zwischenstücke 58 ausgebildet, die über Teilhülsen 57 miteinander verbunden sind. Die Zwischenstücke 58 übernehmen damit auch die Funktion der Konsolen 19 und leiten die vom Auflager 4 aufgenommenen Kräfte in die Teilhülsen 57 weiter. Die Zwischenstücke und Teilhülsen werden über Schweißnähte 59, 60 miteinander verbunden. An den Enden 12, 13 der Hülse 2 sind Endstücke 61, 62 vorgesehen, die entweder das dem jeweiligen Ende 13 zugewandte letzte Auflager 4 oder das Innengewinde 37 aufweisen. Auch mit diesen Endstücken 61, 62 sind die Teilhülsen 57 so verschweißt, daß die gesamte Hülse 2 einen auf ihrer gesamten Länge ebenen Hülsenmantel 3 aufweist, der lediglich von dem Längsschlitz 14 bzw. den Einstecköffnungen 16 unterbrochen ist.

Die Hülse 2 kann in der Weise ausgestaltet sein, daß sie über ihren gesamten Querschnitt verschiedene Wandstärken aufweist. Insbesondere ist daran zu denken, daß im Bereich größter aufzunehmender Biegemomente die Wandstärke dicker als in einem weniger belasteten Bereich ist. In diesem Zusammenhang hat sich herausgestellt, daß in einem vorderen Bereich 63, der der Einstecköffnung 16 benachbart ist, die Wandstärke dicker als in einem hinteren Bereich 64 sein muß, der der Einstecköffnung 16 gegenüberliegt. Der Übergang vom vorderen Bereich 63 in den hinteren Bereich 64 erfolgt kontinuierlich. Soweit die Einstecköffnung 16 durch eine Schlitzverstärkung 34 verstärkt ist, kann im Bereich dieser Schlitzverstärkung 34 die Wandstärke dünner bemessen sein, als bei einer nicht verstärkten Einstecköffnung 16. Im Falle einer verstärkten Einstecköffnung 16 liegt ein Bereich 65 mit dickster Wandstärke unmittelbar hinter dem der Einstecköffnung 16 benachbarten Bereich in Richtung auf den hinteren Bereich 64.

Um die Einleitung der Kraft in die Hülse 2 so zu steuern, daß sie an den Stellen der höchsten Belastbarkeit in die Hülse 2 eintritt, sind erhabene Flächen 66 auf dem Auflager 4 ausgebildet, auf dem der Kopf 5 eines in die Hülse 2 eingehakten Verbinders 7 aufliegt. Von diesen erhabenen Flächen 66 können zwei oder mehrere auf den Umfang der Hülse 2 verteilt sein. Im Regelfall werden aber lediglich zwei erhabene Flächen 66 im Einflußbereich der Stangen 36 verlaufen, die den Längsschlitz 14 verstärken. Die erhabenen Flächen 66 können sich unmittelbar auf dem Auflager 4 erheben. Dieses dient seinerseits dann nicht mehr unmittelbar zur Aufnahme des Kopfes 5. Vielmehr wird über das Auflager 4 in diesen Fällen lediglich die Steifigkeit der Hülse 2 erhöht, so daß sich diese unter dem Einfluß der zu übertragenden Kräfte nicht im Sinne einer Vergrößerung des Längsschlitzes 14 aufweiten kann.

1. Vorrichtung zum Verspannen von Verbindern, die bewegliche Lasten gegeneinander und gegenüber mindestens einem Festpunkt festlegen und die aus mindestens zwei Teilen bestehen, deren einander benachbarte Enden über ein Schloß miteinander verbunden sind, dadurch gekennzeichnet, daß das Schloß (1) mit mindestens zwei in Richtung des Verbinders (7) hintereinanderliegenden Halterungen versehen ist, die eine mindestens eines der benachbarten Enden aufnehmende Ausbildung aufweisen.

2. Vorrichtung nach Anspruch 1, dadurch gekennzeichnet, daß die Halterungen eine aus mehreren Stufen bestehende längeneinstellende Kupplung bilden, in die das eine der beiden benachbarten Enden einrastet und mit der das andere Ende über eine Feinspanneinrichtung in Verbindung steht.

3. Vorrichtung nach Anspruch 1 und 2, dadurch gekennzeichnet, daß die Grobspanneinrichtung als ein Hülse (2) ausgebildet ist, in der die Halterungen als Auflager (4) für die Aufnahme eines der beiden Enden hintereinander angeordnet sind, und in der ein Gewinde (37) als Feinspanneinrichtung ausgebildet ist.

4. Vorrichtung nach Anspruch 1 und 2, dadurch gekennzeichnet, daß die Grobspanneinrichtung als eine Hülse (2) ausgebildet ist, in der einerseits Auflager (4) für die Aufnahme eines der beiden Enden hintereinander angeordnet sind und in der andererseits mindestens ein Auflager (4) für die Aufnahme des anderen Endes ausgebildet ist.

5. Vorrichtung nach Anspruch 1 bis 4, dadurch gekennzeichnet, daß die Auflager in Längsrichtung der Hülse (2) hintereinander angeordnet sind und über einen Längsschlitz (14) miteinander verbunden sind, der sich achsparallel durch einen Hülsenmantel (3) erstreckt.

6. Vorrichtung nach Anspruch 1 bis 5, dadurch gekennzeichnet, daß die Auflager (4) in ihrer Formgebung einem Kopf (5) entsprechen, der an mindestens eines der beiden Enden angestaucht ist.

7. Vorrichtung nach Anspruch 1 bis 6, dadurch gekennzeichnet, daß der Längsschlitz (14) eine der Dicke der beiden Enden entsprechende Breite aufweist und lediglich im Bereich der Auflager (4) zur Aufnahme des Kopfes (5) zu Einsteckőffnungen (16) erweitert ist.

8. Vorrichtung nach Anspruch 1 bis 7, dadurch gekennzeichnet, daß die Auflager (4) Unterstützungsflächen (22) aufweisen, die jeweils in Zugrichtung des jeweiligen Verbinders (7) vom entsprechenden Kopf (5) beaufschlagt sind.

9. Vorrichtung nach Anspruch 1 bis 8, dadurch gekennzeichnet, daß der Verbinder (7) an seinem dem Kopf (5) abgewandten Ende ein Außengewinde (51) aufweist, das dem Innengewinde (49) der Feinspanneinrichtung entspricht.

10. Vorrichtung nach Anspruch 1 bis 8, dadurch gekennzeichnet, daß der Verbinder (7) an seinem dem Kopf (5) abgewandten Ende einen Haken (39) aufweist.

11. Vorrichtung nach Anspruch 1 bis 8, dadurch gekennzeichnet, daß an den Verbinder (7) beidseitig Köpfe (5) angestaucht sind.

12. Vorrichtung nach Anspruch 1 bis 8, dadurch gekennzeichnet, daß der Verbinder (7) beidseitig mit Gewinden (55,56) versehen ist.

13. Vorrichtung nach Anspruch 1 bis 12, dadurch gekennzeichnet, daß der Verbinder (7) als Stange (6,6a) ausgebildet ist.

14. Vorrichtung nach Anspruch 1 bis 12, dadurch gekennzeichnet, daß der Verbinder (7) als Seil ausgebildet ist.

15. Vorrichtung nach Anspruch 1 bis 12, dadurch gekennzeichnet, daß der Verbinder (7) auf Teilstücken als Stange (6, 61) und auf anderen Teilstücken als Seil ausgebildet ist.

16. Vorrichtung nach Anspruch 1 bis 15, dadurch gekennzeichnet, daß das Auflager (4) als Ring (18) ausgebildet ist, der auf seiner dem Kopf (5) zugewandten Seite eine der Form des Kopfes (5) angepaßte Formgebung aufweist.

17. Vorrichtung nach Anspruch 16, dadurch gekennzeichnet, daß der Ring (18) auf Konsolen (19) aufliegt, die im Innenraum (27) der Hülse (2) auf der Innenfläche (21) befestigt sind.

18. Vorrichtung nach Anspruch 16 und 17, dadurch gekennzeichnet, daß mindestens zwei Konsolen (19) auf der Innenfläche (21) aufgeschweißt sind.

19. Vorrichtung nach Anspruch 16 bis 18, dadurch gekennzeichnet, daß die Konsolen (19) sich mit einer Längskante (30) auf der Innenfläche (21) abstützen und zur Einleitung der Kräfte in die Hülse (2) eine schräg in Richtung auf die Innenfläche (21) verlaufende Schrägkante (30) aufweisen.

20. Vorrichtung nach Anspruch 16 bis 19, dadurch gekennzeichnet, daß jede Konsole (19) ein dem Ring (18) zugewandtes Auflager (4) aufweist, das eine den Ring (18) ausrichtende Unterstützungsfläche (22) aufweist.

21. Vorrichtung nach Anspruch 16 bis 20, dadurch gekennzeichnet, daß der Ring (18) eine auf der Konsole (19) aufliegende Abstützungsfläche (20) aufweist, und die Unterstützungsfläche (22) und die Abstützungsfläche (20) eine gleichsinnige in Richtung auf den Hülsenmantel (3) verlaufende Steigung aufweisen.

22. Vorrichtung nach Anspruch 16 bis 21, dadurch gekennzeichnet, daß der Kopf (15) mit seiner Auflagefläche (17) selbstjustierend auf dem Ring (18) aufliegt.

23. Vorrichtung nach Anspruch 16 bis 22, dadurch gekennzeichnet, daß der Kopf (5) und der Ring (18) eine in Richtung auf die Achse (29) der Hülse (2) verlaufende gleichsinnige Steigung aufweisen.

24. Vorrichtung nach Anspruch 1 bis 23, dadurch gekennzeichnet, daß die Hülse (2) auf ihrem Hülsenmantel (3) parallel zur Achse (29) verlaufende Verstärker (34) aufweisen, die sich beidseits der Einstecköffnungen (16) erstrecken.

25. Vorrichtung nach Anspruch 1 bis 24, dadurch gekennzeichnet, daß die Verstärker als auf den Hülsenmantel (3) aufgeschweißte Stangen (36) ausgebildet sind.

26. Vorrichtung nach Anspruch 1 bis 25, dadurch gekennzeichnet, daß am Hülsenmantel (3) mindestens ein Handgriff (40) zum Verdrehen der Hülse (2) um ihre eigene Achse (23) vorgesehen ist.

27. Vorrichtung nach Anspruch 1 bis 26, dadurch gekennzeichnet, daß der Handgriff (40) die Hülse (2) und die Verbinder (7) beim Verdrehen der Hülse (2) diese gegenseitig ausrichtend umspannt.

28. Vorrichtung nach Anspruch 1 bis 27, dadurch gekennzeichnet, daß der Handgriff (40) von der Hülse (2) lösbar ist.

29. Vorrichtung nach Anspruch 1 bis 28, dadurch gekennzeichnet, daß die Hülse (2) gegossen ist.

30. Vorrichtung nach Anspruch 1 bis 29, dadurch gekennzeichnet, daß die Köpfe (5) gegossen sind.

31. Vorrichtung nach Anspruch 1 bis 28, dadurch gekennzeichnet, daß die Hülse (2) geschmiedet ist.

32. Vorrichtung nach Anspruch 31, dadurch gekennzeichnet, daß die Köpfe (5) geschmiedet sind.

33. Vorrichtung nach Anspruch 1 bis 28, dadurch gekennzeichnet, daß die Hülse (2) als eine aus Zwischenstücken (58) und Teilhülsen (57) bestehende Schweißkonstruktion ausgeführt ist und die Zwischenstücke (58) als Auflager (4) ausgebildet sind.

34. Vorrichtung nach Anspruch 1 bis 33, dadurch gekennzeichnet, daß mindestens eine Hülse (2) als Grobspanneinrichtung und ein Spannschloß (45) als Feinspanneinrichtung miteinander kombiniert sind.

35. Vorrichtung nach Anspruch 1 bis 34, dadurch gekennzeichnet, daß die Hülse (2) eine der örtlichen Kraftaufnahme entsprechende Wandstärke aufweist.

36. Vorrichtung nach Anspruch 35, dadurch gekennzeichnet, daß die Hülse (2) in einem vorderen Bereich (63) der Einstecköffnung (16) eine größere und in einem der Einstecköffnung (16) gegenüberliegenden hinteren Bereich (64) eine dünnere Wandstärke aufweist und die Wandstärke in Richtung auf den hinteren Bereich (64) kontinuierlich dünner wird.

37. Vorrichtung nach Anspruch 35 und 36, dadurch gekennzeichnet, daß die Wandstärke ihren dicksten Bereich (65) in Richtung auf den hinteren Bereich (64) unmittelbar hinter der Schlitzverstärkung (34) aufweist.

38. Vorrichtung nach Anspruch 1 bis 37, dadurch gekennzeichnet, daß auf dem Auflager (4) erhabene Flächen (66) ausgebildet sind, die vom Kopf (5) zum Zwecke der definierten Einleitung von Kräften beaufschlagt sind.

39. Vorrichtung nach Anspruch 38, dadurch gekennzeichnet, daß je eine erhabene Fläche (66) im Einflußbereich jeder Schlitzverstärkung (34) angeordnet ist.

Fig. 1

8
8
8
8
7
7
7
7
9
9
9
9
11
10

0080520

Fig. 2

17
6a
13
4
1
14
4
2
16
4
14
3
16
4
35
5
4
17
12
6
15

0080520

Fig. 3

6 III 12 5 1 14 III 4 2 29 27 40 41 42 2 37 13 7 38

Fig. 4

IV IV 21 32 26 30 19 31 22 28 20 24 18 17 23 25 6 19 18 5 27 3 29

0080520

14
34
34
35
33
33


Fig. 5

14
36
36
2
4
66
3
35


Fig. 6

0080520

Fig. 7
3
21
4
22
28
26
19
31
30
32
Fig. 8
21
4
22
28
19
13

0080520

Fig. 9

7
13
4
40
5
16
14
2
16
16
41
4
12
47
7
51
49
40
52
45
48
46
50
7

0080520

Fig. 10
39
7
2
16
14
4
16
19
5
42
41
40
6

Fig. 11

61
13
4
57
59
58
60
4
57
3
37
62
12

54
56
5
5
6
6
6
55
43
5
53

Fig. 12

Fig. 13

Fig. 14

0080520

Fig. 15
Fig. 16
44
39
6
7
5
38

Fig. 17
16
34
63
65
65
2
64

Europäisches Patentamt

**EUROPÄISCHER RECHERCHENBERICHT**

**0080520**

Nummer der Anmeldung

EP 81109911.8

| EINSCHLÄGIGE DOKUMENTE | | | KLASSIFIKATION DER ANMELDUNG (Int Cl ³) |
|---|---|---|---|
| Kategorie | Kennzeichnung des Dokuments mit Angabe, soweit erforderlich, der maßgeblichen Teile | betrifft Anspruch | |
| X | GB - A - 1 245 170 (BRITISH ROPES LIMITED)<br>* Fig. 1,6,7 *<br>-- | 1,2,14 | B 63 B 25/24<br>F 16 B 7/06<br>F 16 G 11/12<br>B 60 P 7/13 |
| A | US - A - 4 048 938 (PATTERSON, GRAPES)<br>* Fig. 2,7 *<br>---- | 1,13 | |
| | | | **RECHERCHIERTE SACHGEBIETE (Int. Cl.³)** |
| | | | B 60 P 7/00<br>B 63 B 25/00<br>F 16 B 2/00<br>F 16 B 3/00<br>F 16 B 7/00<br>F 16 G 11/00 |
| | | | **KATEGORIE DER GENANNTEN DOKUMENTE**<br>X: von besonderer Bedeutung allein betrachtet<br>Y: von besonderer Bedeutung in Verbindung mit einer anderen Veröffentlichung derselben Kategorie<br>A: technologischer Hintergrund<br>O: nichtschriftliche Offenbarung<br>P: Zwischenliteratur<br>T: der Erfindung zugrunde liegende Theorien oder Grundsätze<br>E: älteres Patentdokument, das jedoch erst am oder nach dem Anmeldedatum veröffentlicht worden ist<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| WIEN | 30-06-1982 | SCHMICKL |